# EUROPÄISCHE PATENTANMELDUNG

(11) **EP 3 859 621 A1**
(43) Veröffentlichungstag der Anmeldung: **04.08.2021**
(21) Anmeldenummer: 20200688.8
(22) Anmeldetag: 08.10.2020
(51) Int. Cl.: G06Q 10/06, G06Q 50/02, G06Q 30/02

(54) **VERFAHREN ZUM PROZESSBEZOGENEN GENERIEREN LANDWIRTSCHAFTLICHER DATEN**

(30) Priorität: 29.01.2020 DE 102020102148
(71) Anmelder: 365FarmNet Group KGaA mbh & Co KG, 33428 Harsewinkel (DE)
(72) Erfinder: Poppe-Kirchmann, Stephan, 59348 Lüdinghausen (DE); Grundmann, Marten, 10829 Berlin (DE)
(74) Vertreter: CLAAS Gruppe

(57) **Zusammenfassung**

Die Erfindung betrifft ein Verfahren zum prozessbezogenen Generieren landwirtschaftlicher Daten mittels eines Befragungstools (1) einer Serverplattform (2), wobei die Serverplattform (2) ein Eingabetool (5) aufweist, über das ein Benutzer (4) eine prozessbezogene landwirtschaftliche Eingaberoutine (6), insbesondere eine Dokumentationsroutine zur Dokumentation eines landwirtschaftlichen Prozesses oder eine Planungsroutine zur Planung eines landwirtschaftlichen Prozesses, durchführt, wobei das Befragungstool (1) datentechnisch mit dem Eingabetool (5) verknüpft ist, wobei der Benutzer (4) in der Eingaberoutine (6) der Serverplattform (2) landwirtschaftliche Prozessparameter (7) vorgibt, wobei die Serverplattform (2) einen Datenspeicher (8) mit Befragungsdaten, umfassend mindestens einen landwirtschaftlichen Fragenkatalog (9) mit diesem jeweils zugeordneten Randbedingungen (9a), aufweist, wobei das Befragungstool (1) die Prozessparameter (7) und die Randbedingungen (9a) in einer Vergleichs-Routine (10) auf eine Übereinstimmung überprüft, wobei das Befragungstool (1) bei Vorliegen einer Übereinstimmung den der Übereinstimmung zugeordneten Fragenkatalog (9) auswählt und zumindest eine Frage (11) des ausgewählten Fragenkatalogs (9) auswählt oder generiert und wobei das Befragungstool (1) dem Benutzer (4) die zumindest eine Frage (11) in der Eingaberoutine (5) zur Beantwortung vorgibt.

## Beschreibung

Die Erfindung betrifft ein Verfahren zum prozessbezogenen Generieren landwirtschaftlicher Daten mittels eines Befragungstools einer Serverplattform gemäß Anspruch 1 sowie eine Serverplattform als solche gemäß Anspruch 15.

Es ist in der Landwirtschaft grundsätzlich möglich, eine Vielzahl von Prozessen datengestützt zu optimieren. Grundsätzlich ist es dabei für viele Akteure sinnvoll, die Bedürfnisse anderer Akteure zu berücksichtigen. So ist es dem Hersteller oder Verkäufer von Düngemitteln, Saatgut, Landtechnik oder Pflanzenschutzmitteln möglich, seine Produkte und deren Lieferungen spezifisch an den Markt anzupassen. Um dies effizient vorzunehmen, benötigt er Daten von den Abnehmern, insbesondere den Landwirten. Diese Daten können die Gründe, die Art und die Häufigkeit einer Nutzung eines Produktes, jedoch auch viele andere Faktoren betreffen.

Aktuell gibt es keine Möglichkeit, eine große Menge dieser Daten zuverlässig und effizient zu sammeln. Der Standard hierfür sind Marktforschungsinstitute. Diese sammeln, zumeist am Ende einer landwirtschaftlichen Periode, Daten von Landwirten. Zu diesem Zeitpunkt sind dem Landwirt jedoch nicht mehr alle relevanten Faktoren bekannt und die Ungenauigkeit der gesammelten Daten steigt. Hinzu kommt, dass diese Daten nicht aktuell sind. Es ist also kaum möglich, aktuelle relevante und hochqualitative Daten präzise zu sammeln.

Der Erfindung liegt das Problem zugrunde, das bekannte Verfahren zum prozessbezogenen Generieren landwirtschaftlicher Daten derart auszugestalten und weiterzubilden, dass es den Praxisanforderungen im landwirtschaftlichen Bereich besser gerecht wird. Das obige Problem wird durch die Merkmale von Anspruch 1 gelöst.

Wesentlich ist die grundsätzliche Überlegung, dass Daten zu den relevanten landwirtschaftlichen Prozessen heutzutage bereits digitalisiert werden. Diese Digitalisierung geschieht zumeist kurz nach oder sogar während des landwirtschaftlichen Prozesses. Zum Teil geschieht die Digitalisierung, in Form einer Planung, sogar vor Durchführung des landwirtschaftlichen Prozesses. Genau diese Digitalisierung kann nun genutzt werden, um nebenbei aktuelle und hochrelevante weitere Daten zu sammeln. So kann beispielsweise ein Landwirt, noch während er eine Düngung plant, dazu befragt werden, weshalb er diese Düngung plant. Außerdem kann der Landwirt bei der Dokumentation der Düngung schon kurz nach der Düngung zu anderen Aspekten befragt werden, die sich zu diesem Zeitpunkt noch frisch in seinem Gedächtnis befinden. Dadurch, dass diese Befragung vorschlagsgemäß direkt in eine Eingaberoutine integriert ist, die der Landwirt ohnehin durchführt, wird es erst möglich, mit vertretbarem Aufwand diese Daten zu generieren.

Im Einzelnen wird ein Verfahren zum prozessbezogenen Generieren landwirtschaftlicher Daten mittels eines Befragungstools einer Serverplattform vorgeschlagen, wobei die Serverplattform ein Eingabetool aufweist, über das ein Benutzer eine prozessbezogene landwirtschaftliche Eingaberoutine, insbesondere eine Dokumentationsroutine zur Dokumentation eines landwirtschaftlichen Prozesses oder eine Planungsroutine zur Planung eines landwirtschaftlichen Prozesses, durchführt, wobei das Befragungstool datentechnisch mit dem Eingabetool verknüpft ist, wobei der Benutzer in der Eingaberoutine der Serverplattform landwirtschaftliche Prozessparameter vorgibt, wobei die Serverplattform einen Datenspeicher mit Befragungsdaten, umfassend mindestens einen landwirtschaftlichen Fragenkatalog mit diesem jeweils zugeordneten Randbedingungen, aufweist, wobei das Befragungstool die Prozessparameter und die Randbedingungen in einer Vergleichs-Routine auf eine Übereinstimmung überprüft, wobei das Befragungstool bei Vorliegen einer Übereinstimmung den der Übereinstimmung zugeordneten Fragenkatalog auswählt und zumindest eine Frage des ausgewählten Fragenkatalogs auswählt oder generiert und wobei das Befragungstool dem Benutzer die zumindest eine Frage in der Eingaberoutine zur Beantwortung vorgibt.

Herkömmliche Befragungen zum Generieren derartiger Daten beginnen üblicherweise mit sogenannten Screening-Fragen. Dabei wird zuerst einmal abgefragt, ob der beantwortende Benutzer überhaupt die für die Befragung relevanten Anforderungen erfüllt. Dies ist vorliegend nicht notwendig. Der Abgleich der Randbedingungen kann direkt automatisiert im Hintergrund erfolgen, so dass der Benutzer nur dann mit einer Frage konfrontiert wird, wenn seine Antwort auf diese Frage auch relevant ist. Der Aufwand für den Benutzer wird dadurch sehr gering gehalten. Erst durch diese Verknüpfung eines Befragungstools mit einem Eingabetool einer Serverplattform, das bereits zur Eingabe prozessspezifischer Daten dient, wird die Möglichkeit des Sammelns aktueller und spezifischer Daten eröffnet. Durch herkömmliche Marktforschung wäre dies schlichtweg nicht möglich, da zum einen zu viel Overhead durch das Screening erzeugt wird und zum anderen nicht genügend Benutzer überhaupt zum relevanten Zeitpunkt mit den relevanten Fragen konfrontiert werden können.

Anspruch 2 gibt bevorzugte Ausgestaltungen des Eingabetools und dessen Eingaberoutine an. Bei diesen Ausgestaltungen sind zum einen besonders relevante Prozessparameter der Serverplattform bekannt, so dass präzise Randbedingungen definiert und überprüft werden können, und zum anderen lassen sich besonders hochwertige Daten aus den Fragen generieren.

Anspruch 3 gibt bevorzugte Ausgestaltungen der Prozessparameter und/oder Randbedingungen an, die ebenfalls zu qualitativ hochwertigen Daten führen.

Bei der besonders bevorzugten Ausgestaltung gemäß Anspruch 4 umfasst die Eingaberoutine das Abarbeiten eines adaptiven Prozess-Fragebogens. Dieser Prozess-Fragebogen umfasst mehrere Standardfragen, die insbesondere der Dokumentation und/oder Planung des landwirtschaftlichen Prozesses dienen können. Abhängig von den Antworten des Benutzers auf die Standardfragen kann sich dann der weitere Prozess-Fragebogen verändern, um eine gezielte Eingabe der Prozessparameter zu ermöglichen. Insbesondere im Rahmen dieses adaptiven Prozess-Fragebogens kann das Befragungstool bei einer besonders bevorzugten Ausgestaltung gemäß Anspruch 5 eine Frage des ausgewählten Fragenkatalogs auswählen oder generieren und dem Benutzer vorgeben. Gemäß Anspruch 6 kann diese Frage in einer Ausgestaltung als Teil des adaptiven Prozess-Fragebogens vorgegeben werden, wodurch der Benutzer kaum in seiner Arbeit gestört wird und die Wahrscheinlichkeit einer tatsächlichen Beantwortung der Frage durch den Benutzer sehr hoch wird.

Bei einer Ausgestaltung gemäß Anspruch 7 kann das Befragungstool weitere Fragen des ausgewählten Fragenkatalogs auf Basis zumindest einer bereits beantworteten Frage des ausgewählten Fragenkatalogs auswählen oder generieren. Vorzugsweise geschieht auch dies im Rahmen des adaptiven Prozess-Fragebogens.

Bei der bevorzugten Ausgestaltung gemäß Anspruch 8 werden neben den Prozessparametern auch externe Parameter auf eine Übereinstimmung mit den Randbedingungen überprüft. Dadurch kann die Genauigkeit der Auswahl eines Benutzers bei einem gegebenen Fragenkatalog erhöht werden. Gemäß Anspruch 9 können die externen Parameter beispielsweise Lokalisationsdaten wie eine bestimmte Region und/oder Wetterdaten und/oder Kartierungsdaten umfassen.

Bei der Ausgestaltung gemäß Anspruch 10 können die Randbedingungen zusätzlich gewisse Eingaberoutinen umfassen. Beispielsweise erübrigt sich eine weitere Prüfung, wenn ein Fragenkatalog einen Tierbestand betrifft, die Eingaberoutine jedoch eine Düngung betrifft.

Gemäß Anspruch 11 können die Befragungsdaten zusätzlich oder alternativ Screeningdaten umfassen, wodurch es beispielsweise möglich wird, einen Abgleich der Screeningdaten vor der Vergleichs-Routine durchzuführen und so auf eine rechentechnisch gegebenenfalls teure Vergleichs-Routine häufiger zu verzichten.

Vorzugsweise führt eine Vielzahl von Benutzern mittels der Serverplattform Eingaberoutinen durch. Diese Ausgestaltung ist Gegenstand von Anspruch 12. Je mehr Benutzer die Serverplattform und deren Eingaberoutine nutzen, desto besser können die generierten Daten werden. Um Benutzer zur Teilnahme an den Befragungen zu motivieren, kann die Serverplattform ein automatisches Bonussystem gemäß Anspruch 13 umsetzen.

Bei der Ausgestaltung gemäß Anspruch 14 wird der Fragenkatalog durch einen Anwender definiert, der der Serverplattform die Randbedingungen vorgibt und der von der Serverplattform Antworten einer Vielzahl von Benutzern zur Verfügung gestellt bekommt.

Nach einer weiteren Lehre gemäß Anspruch 15, der eigenständige Bedeutung zukommt, wird eine Serverplattform als solche zur Verwendung in einem vorschlagsgemäßen Verfahren beansprucht. Auf alle Ausführungen zu dem vorschlagsgemäßen Verfahren darf verwiesen werden.

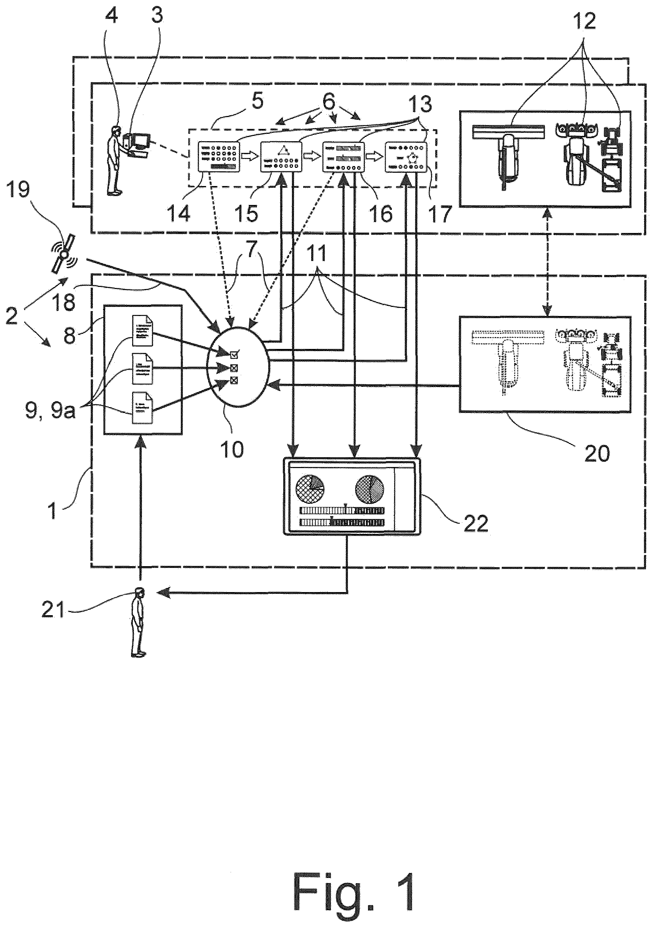

Im Folgenden wird die Erfindung anhand einer lediglich ein Ausführungsbeispiel darstellenden Zeichnung näher erläutert. In der Zeichnung zeigt
- Fig. 1: schematisch das vorschlagsgemäße Verfahren zum prozessbezogenen Generieren landwirtschaftlicher Daten mittels eines Befragungstools einer Serverplattform.

Fig. 1 zeigt schematisch das vorschlagsgemäße Verfahren zum prozessbezogenen Generieren landwirtschaftlicher Daten mittels eines Befragungstools 1 einer Serverplattform 2. Der Begriff "prozessbezogen" meint, dass die generierten Daten einen direkten Bezug zu einem landwirtschaftlichen Prozess aufweisen. Derartige Prozesse können ganz unterschiedliche landwirtschaftliche Arbeiten betreffen. Sie können ganz allgemein eine Tierhaltung oder eine Feldbewirtschaftung, jedoch auch sehr speziell das Füttern eines spezifischen Tieres oder das Ernten einer spezifischen Pflanze betreffen. Der Begriff "Generieren" umfasst zumindest das Sammeln der Daten, kann jedoch auch eine Verarbeitung der Daten betreffen. Die Serverplattform 2 kann einen oder mehrere Server und ein Computerprogramm umfassen und muss nicht zwingend auf einen Ort beschränkt sein. Mindestens umfasst die Serverplattform 2 eine Hardwarekomponente, die ein Computerprogramm ausführt. Grundsätzlich kann vorgesehen sein, dass die Serverplattform 2 einen Computer 3 und/oder ein mobiles Gerät eines Benutzers 4 umfasst. So kann beispielsweise ein Teil eines Computerprogramms der Serverplattform 2 auf dem Computer 3 installiert sein. Prinzipiell ist auch eine dezentrale Ausführungsform der Serverplattform 2 denkbar. Zur Kommunikation mit dem Benutzer 4 umfasst die Serverplattform 2 zumindest ein Eingabegerät und ein Ausgabegerät, hier den Computer 3 des Benutzers 4, oder steht mit diesen, zumindest zeitweise, in Verbindung.

Die Serverplattform 2 weist ein Eingabetool 5 auf, über das der Benutzer 4 eine prozessbezogene landwirtschaftliche Eingaberoutine 6 durchführt. Die Eingaberoutine 6 kann eine Dokumentationsroutine zur Dokumentation eines landwirtschaftlichen Prozesses oder eine Planungsroutine zur Planung eines landwirtschaftlichen Prozesses sein. In der Dokumentationsroutine kann der Benutzer beispielsweise dokumentieren, welchen Dünger er auf welchem Feld ausgebracht hat. In der Planungsroutine kann er diese Ausbringung beispielsweise vorher, zum Beispiel in Abhängigkeit des vorhandenen Düngers, planen. Grundsätzlich kann die Eingaberoutine 6 auch in einen anwendungsgetriebenen Prozess integriert sein und daher Eingaben während der Abarbeitung eines landwirtschaftlichen Prozesses betreffen.

Das Befragungstool 1 ist datentechnisch mit dem Eingabetool 5 verknüpft. Dadurch erhält das Befragungstool 1 Zugriff auf Daten des Eingabetools 5. Der Benutzer 4 gibt in der Eingaberoutine 6 der Serverplattform 2 landwirtschaftliche Prozessparameter 7 vor, die dann hier mindestens teilweise an das Befragungstool 1 weitergegeben werden. Bei diesen Prozessparametern 7 handelt es sich um diverse prozessbezogene Daten, die im Folgenden noch erläutert werden.

Die Serverplattform 2 weist einen Datenspeicher 8 mit Befragungsdaten, umfassend mindestens einen landwirtschaftlichen Fragenkatalog 9 mit diesem jeweils zugeordneten Randbedingungen 9a auf. Die Randbedingungen 9a definieren dabei jene Bedingungen, unter denen der Fragenkatalog 9 zur Anwendung kommen soll. Beispielsweise könnte bei einem Fragenkatalog 9, der ein bestimmtes Pflanzenschutzmittel betrifft, eine Randbedingung sein, dass der entsprechende Benutzer 4 dieses Pflanzenschutzmittel verwendet.

Das Befragungstool 1 überprüft die Prozessparameter 7 und die Randbedingungen 9a in einer Vergleichs-Routine 10 auf eine Übereinstimmung. Diese Übereinstimmung kann auf unterschiedliche Art und Weise definiert sein. Es kann beispielsweise eine prozentuale Übereinstimmung zwischen den Randbedingungen 9a und den Prozessparametern 7 ausreichen, es kann jedoch auch vorgesehen sein, dass gewisse Randbedingungen 9a zwingend erfüllt sein müssen. Es kann auch vorgesehen sein, dass ein Grad der Übereinstimmung ermittelt wird, der in die generierten Daten mit einfließt.

Bei Vorliegen einer Übereinstimmung wählt das Befragungstool 1 den der Übereinstimmung zugeordneten Fragenkatalog 9, in Fig. 1 ist dies beispielhaft der obere Fragenkatalog 9, aus. Das Befragungstool 1 wird dann zumindest eine Frage 11 des ausgewählten Fragenkatalogs 9 auswählen oder generieren. In Fig. 1 ist die Übertragung einiger der Daten, beispielsweise der Prozessparameter 7 und der Frage 11, schematisch durch Pfeile dargestellt.

Hier und vorzugsweise enthält der Fragenkatalog 9 bereits eine oder mehrere vorgegebene auszuwählende Fragen 11. Genauso vorteilhaft kann jedoch vorgesehen sein, dass diese Fragen 11 teilweise oder vollständig, beispielsweise abhängig von den Prozessparametern 7, generiert werden. Das Generieren kann sich dabei auf den Inhalt und/oder die optische Darstellung der Frage 11 beziehen.

Das Befragungstool 1 gibt dem Benutzer 4 die zumindest eine Frage 11 in der Eingaberoutine 6 zur Beantwortung vor. Dafür kann beispielsweise der Computer 3 die Frage 11 auf einem Computerdisplay anzeigen. In einer bevorzugten Variante wird die Frage 11 dem Benutzer 4 während der Abarbeitung eines landwirtschaftlichen Prozesses angezeigt, beispielsweise während des Düngens eines Feldes.

In Fig. 1 ist das Befragungstool 1 schematisch von einem Bereich, der die Umgebung des Benutzers 4 kennzeichnet, abgegrenzt. Es ist auch schematisch dargestellt, dass durchaus mehrere Benutzer 4 vorgesehen sein können, die jedoch nicht alle befragt werden müssen. Die dargestellte Trennung ist jedoch fließend und nicht beschränkend zu verstehen.

Die vorschlagsgemäße Serverplattform 2 wird hier und vorzugsweise primär für diverse Eingabetools 5 und nur sekundär für das vorschlagsgemäße Befragungstool 1 genutzt. So weist die Serverplattform 2 vorzugsweise eine große Benutzerbasis auf, die entsprechend befragt werden kann. Hier und vorzugsweise weist die Serverplattform 2 ein oder mehrere Eingabetools 5 mit Eingaberoutinen 6 für Dokumentationen zu landwirtschaftlichen Feldern und/oder Tieren und/oder für Planungen von Feldbearbeitungsrouten und/oder Felddüngungen und/oder Melkvorgängen und/oder Fruchtfolgen und/oder Fruchtsorten und/oder Pflanzenschutzausbringungen und/oder Auslastungen landwirtschaftlicher Arbeitsmaschinen 12 auf. Je vielseitiger die Serverplattform 2 ist, desto vielseitiger können auch die generierten Daten sein.

Die Prozessparameter 7 und/oder die Randbedingungen 9a können die Nutzung einer landwirtschaftlichen Arbeitsmaschine 12 und/oder die Nutzung, insbesondere den Verbrauch, eines landwirtschaftlichen Arbeitsmittels, insbesondere eines Düngemittels und/oder eines Pflanzenschutzmittels und/oder eines Futtermittels und/oder eines Saatguts, betreffen. Dies kann wiederum die Planung und/oder Dokumentation der Nutzung betreffen.

Wie in Fig. 1 dargestellt umfasst die Eingaberoutine 6 hier und vorzugsweise das Abarbeiten eines Prozess-Fragebogens 13. Dieser Prozess-Fragebogen 13 kann insbesondere ein adaptiver Prozess-Fragebogen 13 sein. Der Begriff "adaptiv" bedeutet hier, dass der Prozess-Fragebogen 13 nicht immer identisch ist, sondern insbesondere abhängig von vorhergehenden Eingaben veränderlich.

Hier und vorzugsweise umfasst der adaptive Prozess-Fragebogen 13 mehrere Standardfragen, die insbesondere der Dokumentation und/oder Planung des landwirtschaftlichen Prozesses dienen. Diese Standardfragen dienen dazu, dem Benutzer 4 die Eingabe der relevanten Prozessparameter 7 zu erleichtern und diese in ein standardisiertes Format zu überführen. Eine derartige Standardfrage könnte zum Beispiel die Frage nach einer Menge eines Düngemittels pro Hektar sein. Es sind jedoch auch durchaus kompliziertere Eingabemasken mit Standardfragen als Eingabeschritte denkbar. Es können zumindest einige der Standardfragen dem Benutzer 4 sequentiell angezeigt werden. Hier und vorzugsweise wird mindestens eine der anzuzeigenden Standardfragen basierend auf Antworten des Benutzers 4 auf mindestens eine der vorhergehenden Standardfragen von dem Eingabetool 5 angezeigt.

Es kann vorgesehen sein, dass im Datenspeicher 8 zumindest ein adaptiver Fragenkatalog 9 gespeichert ist oder dass im Datenspeicher 8 mehrere adaptive Fragenkataloge 9 gespeichert sind. Es kann dann vorgesehen sein, dass das Befragungstool 1 basierend auf den Prozessparametern 7 und/oder den Randbedingungen 9a und/oder mindestens einer Antwort des Benutzers 4 auf die Standardfragen des Prozess-Fragebogens 13 und/oder mindestens einer Antwort des Benutzers 4 auf vorherige Fragen 11 des Befragungstools 1, insbesondere des ausgewählten Fragenkatalogs 9, zumindest eine Frage 11 des ausgewählten Fragenkatalogs 9 auswählt oder generiert. So können auch unterschiedliche Befragungsverläufe und voneinander abhängige Fragen 11 in einem Fragenkatalog 9 abgebildet werden.

Um eine hohe Wahrscheinlichkeit der Beantwortung der Frage 11 durch den Benutzer 4 zu erzielen, kann vorgesehen sein, dass die Frage 11 des Fragenkatalogs 9 den Standardfragen optisch gleicht und sich so in den Prozess-Fragebogen 13 einfügt. Es kann jedoch auch vorgesehen sein, dass die Frage 11 des Fragenkatalogs 9 optisch hervorgehoben ist, um den Benutzer 4 darauf hinzuweisen, dass dies eine Frage 11 des Befragungstools 1 ist.

Hier und vorzugsweise umfasst die Eingaberoutine 6 einen ersten und zweiten Eingabeschritt 14, 15. Diese Eingabeschritte 14, 15 können, wie in Fig. 1 dargestellt, Teile des adaptiven Prozess-Fragebogens 13 sein. In Fig. 1 sind insgesamt vier Eingabeschritte 14, 15, 16, 17 abgebildet. In den Eingabeschritten 14, 15, 16, 17 kann der Benutzer 4 jeweils Prozessparameter 7 vorgeben. Hier und vorzugsweise überprüft das Befragungstool 1 Prozessparameter 7 des ersten Eingabeschritts 14 und die Randbedingungen 9a auf eine Übereinstimmung und gibt dem Benutzer 4 die ausgewählte oder generierte Frage 11 des ausgewählten Fragenkatalogs 9 in dem zweiten Eingabeschritt 15 zur Beantwortung vor. Durch die schrittweise Beantwortung des Prozess-Fragebogens 13 erhält das Befragungstool 1 die Prozessparameter 7 ebenfalls schrittweise und kann daher auf einfache Art und Weise noch während der Eingaberoutine 6 dem Benutzer 4 die Frage 11 vorgeben.

Insbesondere wenn der ausgewählte Fragenkatalog 9 ein adaptiver Fragenkatalog 9 ist, kann das Befragungstool 1 dem Benutzer 4 die ausgewählte oder generierte Frage 11 des ausgewählten Fragenkatalogs 9 in einem Eingabeschritt 15, 16, 17 der Eingaberoutine 6 zur Beantwortung vorgeben und basierend auf einer Antwort des Benutzers 4 eine weitere Frage 11 des ausgewählten Fragenkatalogs 9 auswählen oder generieren und diese in einem weiteren Eingabeschritt 16, 17 dem Benutzer 4 zur Beantwortung vorgeben. Auch so können die Abarbeitung der Eingaberoutine 6 und die Befragung des Befragungstools 1 miteinander synchronisiert werden. Dieser Vorgang kann sich auch mehrfach über mehrere Eingabeschritte 15, 16, 17 ziehen. Selbstverständlich sind auch mehr als die dargestellten vier Eingabeschritte 14, 15, 16, 17 möglich.

Es kann ganz allgemein vorgesehen sein, dass die Serverplattform 2 von einer Vielzahl von Benutzern 4 genutzt wird und das Befragungstool 1 ebenfalls eine Vielzahl dieser Benutzer 4 prinzipiell befragen kann. Um eine Vorauswahl zu treffen, kann das Befragungstool 1 externe Parameter 18 einer Vielzahl von Benutzern 4 und die Randbedingungen 9a auf eine Übereinstimmung überprüfen. Vorzugsweise wird das Befragungstool 1 bei Vorliegen einer Übereinstimmung zwischen den externen Parametern 18 und den Randbedingungen 9a mit dem entsprechenden Eingabetool 5 zur Durchführung der Vergleichs-Routine 10 datentechnisch verknüpft. Insbesondere wird das Befragungstool 1 nur bei Vorliegen einer Übereinstimmung zwischen den externen Parametern 18 und den Randbedingungen 9a mit dem entsprechenden Eingabetool 5 zur Durchführung der Vergleichs-Routine 10 datentechnisch verknüpft. So können ein oder mehrere zu befragende Benutzer 4 schon im Voraus ausgewählt werden. Beispielsweise könnte sich ein Fragenkatalog 9 nur an Benutzer 4 aus einer bestimmten Region richten, die dann entsprechend vorausgewählt werden. Sind dann für einen gegebenen Benutzer 4 keine seine Region betreffenden Fragenkataloge 9 verfügbar, muss sein Eingabetool 5 auch nicht mit dem Befragungstool 1 verknüpft werden.

Zusätzlich oder alternativ kann das Befragungstool 1 bei Vorliegen einer Übereinstimmung zwischen den Randbedingungen 9a eines Fragenkatalogs 9 und den externen Parametern 18 die Vergleichs-Routine 10 durchführen. Insbesondere kann das Befragungstool 1 nur bei Vorliegen einer Übereinstimmung zwischen den Randbedingungen 9a eines Fragenkatalogs 9 und den externen Parametern 18 die Vergleichs-Routine 10 durchführen Auch diese Vorauswahl wirkt sich effizient steigernd aus. Der Begriff "verknüpft" bezieht sich dabei auf die funktionale Verbindung zwischen dem Eingabetool 5 und dem Befragungstool 1 und darauf, dass das Befragungstool 1 die Prozessparameter 7 erhält und verwendet.

Hier und vorzugsweise empfängt die Serverplattform 2 die externen Parameter 18 aus einer externen Datenquelle 19. Diese externe Datenquelle 19 ist hier und vorzugsweise extern zu allen Benutzern 4 und der Serverplattform 2. Die externe Datenquelle 19 kann beispielsweise ein Wettersatellit sein. Hier und vorzugsweise umfassen die externen Parameter 18 Lokalisationsdaten, insbesondere GPS-Daten, und/oder Wetterdaten und/oder Kartierungsdaten.

Die Randbedingungen 9a zumindest eines Fragenkatalogs 9 können weiterhin eine Zuordnung einer Eingaberoutine 6 umfassen. Dann soll der Fragenkatalog 9 nur zum Einsatz kommen, wenn der Benutzer 4 diese Eingaberoutine 6 durchführt. Das Befragungstool 1 kann ganz allgemein in der Vergleichs-Routine 10 die Randbedingungen 9a und die Prozessparameter 7 auf eine Übereinstimmung überprüfen, wenn der Benutzer 4 die dem Fragenkatalog 9 zugeordnete Eingaberoutine 6 durchführt. Insbesondere wird das Befragungstool 1 kann in der Vergleichs-Routine 10 die Randbedingungen 9a und die Prozessparameter 7 nur dann auf eine Übereinstimmung überprüfen, wenn der Benutzer 4 die dem Fragenkatalog 9 zugeordnete Eingaberoutine 6 durchführt. Wie oben bereits erwähnt, ist es effizient steigernd, wenn die Prozessparameter 7 einer Eingaberoutine 6, die einer Tierhaltung zugeordnet ist, nicht mit den Randbedingungen 9a eines Fragenkatalogs 9, der einer Feldbearbeitung zugeordnet ist, auf eine Übereinstimmung überprüft werden.

Ebenfalls zur Vorauswahl kann zumindest ein Fragenkatalog 9 weiterhin Screeningdaten umfassen. Das Befragungstool 1 kann dann die Screeningdaten und dem jeweiligen Benutzer 4 zugeordnete Benutzerdaten 20 auf Vorliegen einer Screening-Übereinstimmung überprüfen. Die in Fig. 1 dargestellten Benutzerdaten 20 sind hier und vorzugsweise der Serverplattform 2 bekannte digitale Daten, die diverse Eigenschaften eines Benutzers 4 abbilden können. Hier und vorzugsweise umfassen die Benutzerdaten 20 zumindest Daten über das Vorhandensein von landwirtschaftlichen Arbeitsmaschinen 12 und/oder Viehbeständen und/oder Feldbeständen und/oder Fruchtsorten oder dergleichen.

Weiterhin können die Screeningdaten und die Benutzerdaten 20 Lokalisationsdaten, insbesondere GPS-Daten, umfassen. Hier und vorzugsweise führt das Befragungstool 1 nur bei Vorliegen einer Screening-Übereinstimmung die Vergleichs-Routine 10 durch.

Hier und vorzugsweise führt eine Vielzahl von Benutzern 4, vorzugsweise mindestens 10 Benutzer 4, weiter vorzugsweise mindestens 100 Benutzer 4, noch weiter vorzugsweise mindestens 500 Benutzer 4, mittels der Serverplattform 2 Eingaberoutinen 6 durch.

Um möglichst viele der Benutzer 4 zu einer Teilnahme an den Befragungen zu motivieren, kann vorgesehen sein, dass der Benutzer 4 mittels eines automatischen Bonussystems der Serverplattform 2 für das Beantworten der Frage 11 belohnt wird, indem das Befragungstool beispielsweise eine Rabattierung von Nutzungsgebühren bewirkt.

Hier und vorzugsweise wird ein Fragenkatalog 9 von einem Anwender 21 definiert, der der Serverplattform 2 die Randbedingungen 9a vorgibt. So können Anwendern 21, die ohne die Serverplattform 2 keinen Zugriff auf die generierten Daten hätten, diese Daten zur Verfügung gestellt werden und Daten für diese generiert werden. Hier und vorzugsweise stellt die Serverplattform 2 Antworten 22 einer Vielzahl von Benutzern 4 dem Anwender 21, vorzugsweise aggregiert, zur Verfügung.

Gemäß einer weiteren Lehre, der eigenständige Bedeutung zukommt, wird eine Serverplattform 2 als solche ausgestaltet zur Verwendung in einem vorschlagsgemäßen Verfahren vorgeschlagen. Auf alle Ausführungen zu dem vorschlagsgemäßen Verfahren darf verwiesen werden. Hier und vorzugsweise umfasst die Serverplattform 2 zumindest einen Server und ein Computerprogramm. Auch dem Computerprogramm kommt dabei eigenständige Bedeutung zu. Hier und vorzugsweise weist die Serverplattform 2 ein Eingabetool 5 auf, über das ein Benutzer 4 eine prozessbezogene landwirtschaftliche Eingaberoutine 6 durchführen kann. Weiterhin weist die Serverplattform 2 vorzugsweise ein Befragungstool 1 auf.

### Bezugszeichenliste

- 1: Befragungstool
- 2: Serverplattform
- 3: Computer
- 4: Benutzer
- 5: Eingabetool
- 6: Eingaberoutine
- 7: Prozessparameter
- 8: Datenspeicher
- 9: Fragenkatalog
- 9a: Randbedingungen
- 10: Vergleichs-Routine
- 11: Frage
- 12: Landwirtschaftliche Arbeitsmaschine
- 13: Prozess-Fragebogen
- 14: Erster Eingabeschritt
- 15: Zweiter Eingabeschritt
- 16: Dritter Eingabeschritt
- 17: Vierter Eingabeschritt
- 18: Externe Parameter
- 19: Externe Datenquelle
- 20: Benutzerdaten
- 21: Anwender
- 22: Antworten

## Patentansprüche

1. Verfahren zum prozessbezogenen Generieren landwirtschaftlicher Daten mittels eines Befragungstools (1) einer Serverplattform (2),
wobei die Serverplattform (2) ein Eingabetool (5) aufweist, über das ein Benutzer (4) eine prozessbezogene landwirtschaftliche Eingaberoutine (6), insbesondere eine Dokumentationsroutine zur Dokumentation eines landwirtschaftlichen Prozesses oder eine Planungsroutine zur Planung eines landwirtschaftlichen Prozesses, durchführt,
wobei das Befragungstool (1) datentechnisch mit dem Eingabetool (5) verknüpft ist,
wobei der Benutzer (4) in der Eingaberoutine (6) der Serverplattform (2) landwirtschaftliche Prozessparameter (7) vorgibt,
wobei die Serverplattform (2) einen Datenspeicher (8) mit Befragungsdaten, umfassend mindestens einen landwirtschaftlichen Fragenkatalog (9) mit diesem jeweils zugeordneten Randbedingungen (9a), aufweist,
wobei das Befragungstool (1) die Prozessparameter (7) und die Randbedingungen (9a) in einer Vergleichs-Routine (10) auf eine Übereinstimmung überprüft,
wobei das Befragungstool (1) bei Vorliegen einer Übereinstimmung den der Übereinstimmung zugeordneten Fragenkatalog (9) auswählt und zumindest eine Frage (11) des ausgewählten Fragenkatalogs (9) auswählt oder generiert und
wobei das Befragungstool (1) dem Benutzer (4) die zumindest eine Frage (11) in der Eingaberoutine (5) zur Beantwortung vorgibt.

2. Verfahren nach Anspruch 1, **dadurch gekennzeichnet, dass** die Serverplattform (2) ein oder mehrere Eingabetools (5) mit Eingaberoutinen (6) für Dokumentationen zu landwirtschaftlichen Feldern und/oder Tieren und/oder für Planungen von Feldbearbeitungsrouten und/oder Felddüngungen und/oder Melkvorgängen und/oder Fruchtfolgen und/oder Fruchtsorten und/oder Pflanzenschutzausbringungen und/oder Auslastungen landwirtschaftlicher Arbeitsmaschinen (12) aufweist.

3. Verfahren nach Anspruch 1 oder 2, **dadurch gekennzeichnet, dass** die Prozessparameter (7) und/oder die Randbedingungen (9a) die Nutzung einer landwirtschaftlichen Arbeitsmaschine (12) und/oder die Nutzung, insbesondere den Verbrauch, eines landwirtschaftlichen Arbeitsmittels, insbesondere eines Düngemittels und/oder eines Pflanzenschutzmittels und/oder eines Futtermittels und/oder eines Saatguts, betreffen.

4. Verfahren nach einem der vorhergehenden Ansprüche, **dadurch gekennzeichnet, dass** die Eingaberoutine (6) das Abarbeiten eines adaptiven Prozess-Fragebogens (13) umfasst, dass der adaptive Prozess-Fragebogen (13) mehrere Standardfragen umfasst, die insbesondere der Dokumentation und/oder Planung des landwirtschaftlichen Prozesses dienen, dass einige der Standardfragen dem Benutzer (4) sequentiell angezeigt werden, vorzugsweise, dass mindestens eine der anzuzeigenden Standardfragen basierend auf Antworten des Benutzers (4) auf mindestens eine der vorhergehenden Standardfragen von dem Eingabetool (5) angezeigt wird.

5. Verfahren nach einem der vorhergehenden Ansprüche, **dadurch gekennzeichnet, dass** im Datenspeicher (8) zumindest ein adaptiver Fragenkatalog (9) gespeichert ist, dass das Befragungstool (1) basierend auf den Prozessparametern (7) und/oder den Randbedingungen (9a) und/oder mindestens einer Antwort des Benutzers (4) auf die Standardfragen des Prozess-Fragebogens (13) und/oder mindestens einer Antwort des Benutzers (4) auf vorherige Fragen (11) des Befragungstools (1), insbesondere des ausgewählten Fragenkatalogs (9), zumindest eine Frage (11) des ausgewählten Fragenkatalogs (9) auswählt oder generiert.

6. Verfahren nach einem der vorhergehenden Ansprüche, **dadurch gekennzeichnet, dass** die Eingaberoutine (6) einen ersten und einen zweiten Eingabeschritt (14, 15), insbesondere als Teile des adaptiven Prozess-Fragebogens (13), umfasst, in denen der Benutzer (4) jeweils Prozessparameter (7) vorgibt, dass das Befragungstool (1) Prozessparameter (7) des ersten Eingabeschritts (14) und die Randbedingungen (9a) auf eine Übereinstimmung überprüft und dass das Befragungstool (1) dem Benutzer (4) die ausgewählte oder generierte Frage (11) des ausgewählten Fragenkatalogs (9) in dem zweiten Eingabeschritt (15) zur Beantwortung vorgibt.

7. Verfahren nach einem der vorhergehenden Ansprüche, **dadurch gekennzeichnet, dass** das Befragungstool (1) dem Benutzer (4) die ausgewählte oder generierte Frage (11) des ausgewählten Fragenkatalogs (9) in einem Eingabeschritt (14, 15, 16, 17) der Eingaberoutine (6) zur Beantwortung vorgibt und basierend auf einer Antwort des Benutzers (4) eine weitere Frage (11) des ausgewählten Fragenkatalogs (9) auswählt oder generiert und diese in einem weiteren Eingabeschritt (16, 17) dem Benutzer (4) zur Beantwortung vorgibt.

8. Verfahren nach einem der vorhergehenden Ansprüche, **dadurch gekennzeichnet, dass** das Befragungstool (1) externe Parameter (18) einer Vielzahl von Benutzern (4) und die Randbedingungen (9a) auf eine Übereinstimmung überprüft, vorzugsweise, dass das Befragungstool (1), insbesondere nur, bei Vorliegen einer Übereinstimmung zwischen den externen Parametern (18) und den Randbedingungen (9a) mit dem entsprechenden Eingabetool (5) zur Durchführung der Vergleichs-Routine (10) datentechnisch verknüpft wird, und/oder, dass das Befragungstool (1), insbesondere nur, bei Vorliegen einer Übereinstimmung zwischen den Randbedingungen (9a) eines Fragenkatalogs (9) und den externen Parametern (18) die Vergleichs-Routine (10) durchführt.

9. Verfahren nach Anspruch 8, **dadurch gekennzeichnet, dass** die Serverplattform (2) die externen Parameter (18) aus einer externen Datenquelle (19) empfängt, und/oder, dass die externen Parameter (18) Lokalisationsdaten, insbesondere GPS-Daten, und/oder Wetterdaten und/oder Kartierungsdaten umfassen.

10. Verfahren nach einem der vorhergehenden Ansprüche, **dadurch gekennzeichnet, dass** die Randbedingungen (9a) zumindest eines Fragenkatalogs (9) eine Zuordnung einer Eingaberoutine (6) umfassen und dass das Befragungstool (1) in der Vergleichs-Routine (10) die Randbedingungen (9a) und die Prozessparameter (7), insbesondere nur, auf eine Übereinstimmung überprüft, wenn der Benutzer (4) die dem Fragenkatalog (9) zugeordnete Eingaberoutine (6) durchführt.

11. Verfahren nach einem der vorhergehenden Ansprüche, **dadurch gekennzeichnet, dass** zumindest ein Fragenkatalog (9) weiterhin Screeningdaten umfasst und dass das Befragungstool (1) die Screeningdaten und dem jeweiligen Benutzer (4) zugeordnete Benutzerdaten (20) auf Vorliegen einer Screening-Übereinstimmung überprüft, und dass das Befragungstool (1), insbesondere nur, bei Vorliegen einer Screening-Übereinstimmung die Vergleichs-Routine (10) durchführt, vorzugsweise, dass die Screeningdaten und die Benutzerdaten (20) Lokalisationsdaten, insbesondere GPS-Daten, umfassen.

12. Verfahren nach einem der vorhergehenden Ansprüche, **dadurch gekennzeichnet, dass** eine Vielzahl von Benutzern (4), vorzugsweise mindestens 10 Benutzer (4), weiter vorzugsweise mindestens 100 Benutzer (4), noch weiter vorzugsweise mindestens 500 Benutzer (4), mittels der Serverplattform (2) Eingaberoutinen (6) durchführen.

13. Verfahren nach einem der vorhergehenden Ansprüche, **dadurch gekennzeichnet, dass** der Benutzer (4) mittels eines automatischen Bonussystems der Serverplattform (2) für das Beantworten der Frage (11) belohnt wird.

14. Verfahren nach einem der vorhergehenden Ansprüche, **dadurch gekennzeichnet, dass** ein Anwender (21) einen Fragenkatalogs (9) definiert, dass der Anwender (21) der Serverplattform (2) die Randbedingungen (9a) vorgibt, dass die Serverplattform (2) Antworten (22) einer Vielzahl von Benutzern (4) dem Anwender (21), vorzugsweise aggregiert, zur Verfügung stellt.

15. Serverplattform ausgestaltet zur Verwendung in einem Verfahren nach einem der vorhergehenden Ansprüche.
